# EUROPÄISCHE PATENTANMELDUNG

(11) **EP 1 634 940 A1**
(43) Veröffentlichungstag der Anmeldung: **15.03.2006**
(21) Anmeldenummer: 05019068.5
(22) Anmeldetag: 02.09.2005
(51) Int. Cl.: C10M 155/02, C08F 290/14, C08F 283/12, C10M 159/00

(54) **Wasserunlösliche gepfropfte Polysiloxan-copolymerisate und deren Verwendung zur Entschäumung und Entlüftung nichtwässriger Öle**

(30) Priorität: 14.09.2004 DE 102004044253
(71) Anmelder: Goldschmidt GmbH, 45127 Essen (DE)
(72) Erfinder: Dr. Favresse, Philippe, 63755 Alzenau (DE); Hänsel, Rene, 46282 Dorsten (DE)

(57) **Zusammenfassung**

Gegenstand der Erfindung sind gepfropfte Polyoxyalkylen-Polysiloxan-Copolymeren und deren Verwendung als Entschäumer und Entlüfter für nichtwässrige Systeme auf Basis von Mineralölen oder Syntheseölen, bevorzugt enthaltend mindestens ein Siliconpolyether-Copolymer der allgemeinen Formel (V) 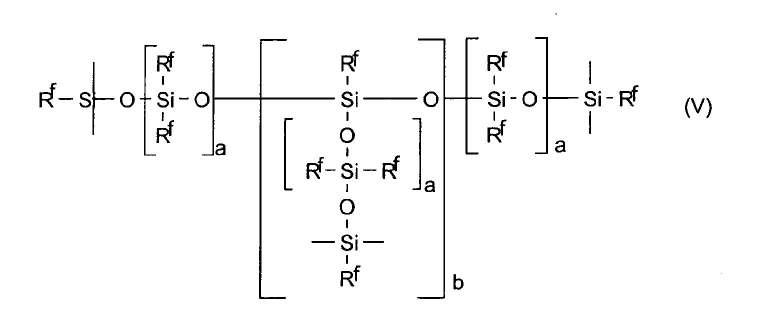 worin R^{f} unterschiedliche Reste sein können, jedoch mindestens ein R^{f} ein Polyetherrest ist.

## Beschreibung

Die Erfindung betrifft wasserunlösliche gepfropfte Polysiloxan-Copolymerisate und deren Verwendung zur Entschäumung und Entlüftung nichtwässriger Öle.

Nicht wassermischbare, ölbasierende Systeme werden insbesondere in Kraftübertragungsölen als Hydrauliköle, Getriebeöle, Turbinenöle und Motorenöle und in der Metallbearbeitung als beispielsweise Schleiföle eingesetzt. Die auf naphtenbasischen, paraffinbasischen Mineralölen bzw. Hydrocrackölen oder synthetischen Ölen wie auf Poly-α-olefinen basierenden Systeme sollen eine ausreichende Schmierung gewährleisten und in untergeordneten Maßen auch Wärme abführen.

Moderne Maschinen sind auf höchste Belastungen ausgelegt und müssen auch unter extremen klimatischen Verhältnissen zuverlässig funktionieren.

Diese Leistungssteigerung setzt auch erhöhte Ansprüche an die Qualität der verwendeten Mineralöle voraus. Es ist daher üblich, diesen Mineralölen neben üblichen Additiven wie Korrosionsschutzmitteln, EP/AW-Additiven, Dismulgatoren, Antioxidantien auch Entschäumer und Entlüfter zuzusetzen, um die Menge der beim Betrieb von Motoren, Pumpen oder Turbinen durch Verwirbelung in das Öl eingeschleppte Luft zu vermindern und/oder ihre Abgabe aus dem System zu beschleunigen.

Größere Mengen an dispergierter Luft verändern die Eigenschaften des Mineralöls. Die Kompressibilität in hydraulischen Systemen wird spürbar größer; Kavitationseffekte erhöhen den Geräuschpegel der arbeitenden Aggregate, sie verursachen Leistungsabfälle, erhöhen spürbar Abnutzungserscheinungen (Erosionsverschleiß) und verringern damit in gleichem Maße die Betriebssicherheit und die Laufzeit der Maschinen.

Die Entwicklung von Schaum, welcher sich an der Oberfläche des Mineralöls beim Entweichen von Luft bildet, muss unterdrückt werden, da Schaum die rheologischen und chemischen Eigenschaften (Oxidation) der Systeme verändert und die Schmierungs- und Kraftübertragungsprozesse, die Gebrauchszeiten von Öl und Maschinen beeinträchtigt.

Da moderne Maschinen in ihren Abmessungen immer weiter reduziert werden und somit auch die benötigten Ölvolumina sowie die benötigten Ölvorratsbehälter immer kleiner dimensioniert sind, haben sich auch die zur Entschäumung zur Verfügung stehenden Volumina sowie die zur Entlüftung zur Verfügung stehenden Zeiten stark reduziert.

Die zur Zeit herkömmlich eingesetzten Entschäumer und Entlüfter sind überwiegend Polyalkylsiloxane und Polyacrylate.

Polyacrylate sind weitgehend unproblematisch hinsichtlich ihres Luftabgabevermögens aber als Entschäumer wenig effektiv, so dass eine größere Dosierung für die Entschäumung notwendig ist. Des Weiteren sind unerwünschte, die Wirksamkeit vermindernde, Wechselwirkungen mit anderen Legierungsbestandteilen des Öls bekannt.

Polyalkylsiloxane, vorzugsweise Polymethylsiloxane sind wirkungsvolle Entschäumer; bei ihrem Einsatz verschlechtert sich jedoch das Luftabgabevermögen (LAV) von unlegierten und legierten Ölen in Abhängigkeit vom Legierungsgrad zum Teil in erheblichem Maße.

Zur Bestimmung des LAV gibt es verschiedene Methoden wie DIN 51381, ASTM D 3427-93, ISO/DIS 9120, ANFOR NFT 60-149. Als LAV wird mit diesen Methoden die Zeit gemessen, bei der das Volum an in Öl dispergierter Luft auf ein bestimmtes Volum (0,2 %) reduziert wird, d.h. die Zeit, die durch den Arbeitsvorgang der in Öl eingeschlossenen Luftblasen benötigt wird, um an die Oberfläche zu steigen und zu entweichen.

Ein vermindertes Luftabgabevermögen in Kraftübertragungsölen oder Schmierölen beeinträchtigt jedoch die technische Betriebssicherheit insbesondere der Systeme, die mit hohen Ölumwälzcylen arbeiten und bei denen daher für die Öle in den gering dimensionierten Vorratsbehältern nur wenig Zeit zur Entlüftung (Luftabscheidung) vorgesehen ist.

Es wird daher von einigen Anlagenherstellern aus diesem Grunde vom Einsatz von Polysiloxanen abgeraten.

Effektiv als Entschäumer sind auch herkömmliche Siliconpolyether-Copolymere. Diese enthalten einen oder mehrere Polyether, welche durch Anlagerung von Monomeren wie Propylenoxid und/oder Ethylenoxid, an Startalkohole, wie Allyalkohol, entstehen.

Siliconpolyether-Copolymere wirken, da sie nur teilweise, durch gezielte Modifizierung, in dem zu entschäumenden Medium löslich sind und durch ihre Oberflächenaktivität in die Grenzfläche eintreten.

Die theoretischen Grundlagen zum Bildungsmechanismus dispergierter Luft in Öl und Oberflächenschaum aus gelöster und mechanisch eingearbeiteter Luft und die möglichen Auswirkungen im technischen Betrieb sind seit gut 50 Jahren bekannt (Tourret; White: Aeration and Foaming in Lubricating Oil Systems; Aircraft Engng. 24 (1952), 122-130, 137).

Daraus resultiert die Erkenntnis, dass für die Inhibierung des Oberflächenschaums und der dispergierten Luft gegenläufige Anforderungen bestehen. Oberflächenaktive Stoffe (Si-Öle), welche die Entstehung von Schaum inhibieren, wirken sich negativ auf das Luftabscheidevermögen (LAV) aus.

Bei Mineralölen ist daher die Inhibierung des Oberflächenschaums unter gleichzeitiger Beibehaltung eines günstigen LAV nur durch Auffinden eines optimalen Kompromisses in Form eines Gleichgewichtes möglich.

Die Lösungsvorschläge des Standes der Technik sind der Auffindung dieses optimalen Gleichgewichts noch nicht gerecht geworden.

Um ein hydrophiles/hydrophobes Gleichgewicht in wässrigen Systemen besonders variabel einstellen zu können, haben sich in der Vergangenheit Polyoxyalkylen-Polysiloxan-Blockmischcopolymerisate als geeignet herausgestellt, wie dies unter anderem in US-A-3 763 021 beschrieben ist.

Man macht sich bei Verwendung der Polyoxyalkylen-Polysiloxan-Blockmischcopolymerisate zunutze, dass die Polysiloxanblöcke gezielt mit Polyoxyalkyleneinheiten modifiziert werden können, die durch ihre Zusammensetzung aus hydrophilen und hydrophoben Polyoxyalkyleneinheiten im Zusammenspiel mit dem Polysiloxanblock an das gewünschte Gleichgewicht angepasst werden können.

Dem Stand der Technik, als ein Beispiel sei hier DE-C-1 012 602 genannt, entsprechen Polyoxyalkylen-Polysiloxan-Blockmischcopolymerisate, in denen der Polyoxyalkylenblock als (CₙH₂ₙO)ₓ definiert ist. Der Index n ist dabei eine ganze Zahl von 2 bis 4, wobei wesentlich ist, dass diese Polyoxyalkylenblöcke als gemeinsames Strukturelement stets -CH₂-CHR-O-Gruppen enthalten, wobei R einem Wasserstoffatom, einer Methylgruppe oder einer Ethylgruppe entsprechen kann. Solche Polyoxyalkylenblöcke werden durch ionische Polymerisation von Oxiranderivaten, wie Ethylenoxid, Propylenoxid und Epoxiden längerkettiger Olefine hergestellt.

Typischerweise werden aber in dem Stand der Technik entsprechenden Polyoxyalkylen-Polysiloxan-Blockmischcopolymerisaten Polyoxyethylene und Polyoxypropylene eingesetzt.

Durch Variation der Oxyalkylenbausteine, insbesondere durch Veränderungen ihres Mengenverhältnisses zueinander und ihrer Abfolge im Polymer (statistisch und/oder blockweise), sind eine große Zahl an Polyoxyalkylen-Polysiloxan-Blockmischcopolymerisaten erhältlich.

Aufgrund der Beschränkung auf diese oben beschriebenen Grundbausteine ist es aber in vielen Fällen bis heute selbst für wässrige Systeme, in denen das LAV keine wesentliche Rolle spielt, nicht gelungen, die für bestimmte Entschäumer notwendige optimale Inkompatibilitäts-/Kompatibilitätsbalance zu finden.

In der DD 213 945 werden Schauminhibitoren für Schmieröle auf Mineralölbasis vorgeschlagen, welche die Oberflächenschaumbildung verhindern und gleichzeitig das Luftabgabevermögen der Öle möglichst wenig verschlechtern sollen. Die vorgeschlagenen Verbindungen enthalten ein Polysiloxan-Grundgerüst mit seitenständigen Ethylenoxid- und Propylenoxideinheiten und sind endständig mit Butylgruppen abgeschlossen:

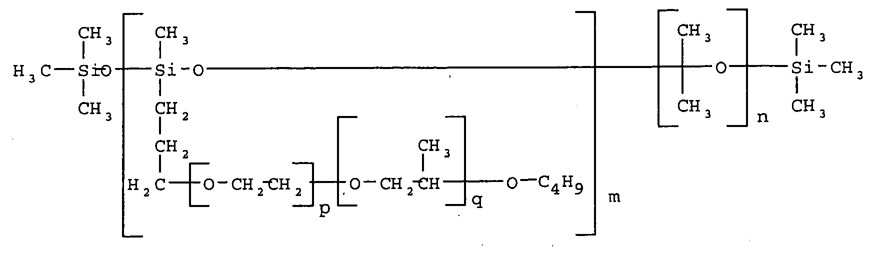

Die mittleren Verhältnisse von m : n liegen zwischen 1 : 1 bis 1 : 8; das Verhältnis von p : q beträgt 1 : 2 bis 2 : 1, wobei die mittlere Molmasse der Polyetherkette 1.000 bis 3.000 g/mol und die des Siloxanblocks 2.000 bis 6.000 g/mol beträgt.

Vergleichbare Verbindungen für diesen Zweck werden in der JP-A-11-209778 vorgestellt.

Diese Verbindungen weichen ebenfalls nicht von den oben beschriebenen Ethylenoxid- und Propylenoxid-Grundeinheiten ab und sind weiter verbesserungsbedürftig in Richtung auf den angestrebten optimalen Kompromiss.

Eine Aufgabe war es, als Schauminhibitoren für nichtwässrige Synthese- und/oder Mineralölsysteme besonders geeignete Polyoxyalkylen-Polysiloxan-Blockmischcopolymerisatderivate zur Verfügung zu stellen, welche die Oberflächenschaumbildung verhindern oder vermindern und gleichzeitig das Abscheiden der in synthetischen und/oder mineralischen Ölen dispergierten Luft in praxisgerechten Zeiten ermöglichen.

Obwohl diese Aufgabe zum Teil durch die in EP-A-1 284 282 beschriebenen Strukturen gelöst worden ist, ist deren Verwendung meist auf bestimmte nichtwässrige Synthese- und/oder Mineralölsysteme beschränkt, wobei immer ein Kompromiss zwischen Entschäumen und Entlüften einzuhalten ist. Aus diesem Grund besteht die Aufgabe der vorliegenden Erfindung eine Substanz zu entwickeln, die genau so gut Entschäumen kann wie die Polyethersiloxane und gleichzeitig genau so gut Entlüften kann wie die Polyacrylate.

Überraschenderweise wurde nun gefunden, dass diese Aufgabe gelöst werden konnte durch ein Polymerisat, erhältlich durch radikalische Polymerisation von ethylenisch ungesättigten Monomeren A in Gegenwart von alkylenoxid-haltigem Siliconderivat B mit geringem hydrophilen Charakter. Die Monomere A bestehen bevorzugterweise aus einem Gemisch aus ethylenisch ungesättigten Monomeren.

Die Erfindung umfasst die Erkenntnis, dass die einzelnen Komponenten der gepfropften Polyethersiloxane für sich, also das polymerisierte Monomer A und das Polyethersiloxan B, nicht notwendigerweise Entschäumen bzw. Entlüften müssen.

Gegenstand der Erfindung sind daher wasserunlösliche gepfropfte Polyoxyalkylen-Polysiloxan-Copolymeren mit olefinischen Monomeren und deren Verwendung als Entschäumer und Entlüfter für nichtwässrige Systeme auf Basis von Mineralölen oder Syntheseölen.

Die vorteilhaften Eigenschaften der erfindungsgemässen Polymeren führen im Ölbereich zu der erwünschten Eigenschaftskombination von Entschäumer und Entlüfter, ohne sich gegenseitig zu beeinflussen, wie es im Gegenstatz bis jetzt in der Praxis und Theorie bekannt war.

Die Erfindung wird bevorzugt ausgeführt indem eine Kombination aus mindestens zwei unterschiedlichen Monomeren A in Gegenwart von Polysiliconderivat B polymerisiert werden, wobei für die relativen Massenanteile gilt:
A < 50 Gew.-%,
B > 50 Gew.-%.

Insbesondere werden folgende relativen Massenanteile eingesetzt:
A 20 bis 40 Gew.-%,
B 60 bis 80 Gew.-%.

Bei der Auswahl der Monomeren A und des Polysiliconderivates B bzw. deren relativen Verhältnissen ist zu beachten, dass das resultierende gepfropfte Polysiliconderivat wasserunlöslich ist.

Die Monomeren A können unter Verwendung irgendeiner konventionellen synthetischen Methode homo- oder copolymerisiert werden. Beispielsweise können dies Lösungspolymerisation, Emulsionspolymerisation, umgekehrte Emulsionspolymerisation, Suspensionspolymerisation, umgekehrte Suspensiönspolymerisation oder Fällungspolymerisation sein, ohne dass die verwendbaren Methoden darauf beschränkt sind. Bei der Lösungspolymerisation kann Wasser, übliche organische Lösungsmittel oder die erfindungsgemäßen Siliconderivate B selbst als Lösungsmittel verwendet werden. Dieses letzte Verfahren wird jedoch bevorzugt.

Monomere die mit einer durch freie Radikale initiierten Reaktion polymerisiert werden können sind bevorzugt. Der Begriff ethylenisch ungesättigt bedeutet, dass die Monomere zumindest eine polymerisierbare Kohlenstoff-Kohlenstoff Doppelbindung besitzen, die mono-, di-, tri-, oder tetrasubstituiert sein kann.

Die bevorzugten ethylenisch ungesättigten Monomere können durch die folgende allgemeine Formel beschrieben werden:

X-C (O) CR⁷=CHR⁶

wobei X ausgewählt ist aus der Gruppe der Reste -OH, -OM, -OR⁸, NH₂, NHR⁸, N(R⁸)² .

M ist ein Kation ausgewählt aus der Gruppe bestehend aus: Na+, K+, Mg++, Ca++, Zn++, NH4+, Alkylammonium, Dialkylammonium, Trialkylammonium und Tetraalkylammonium.

Die Reste R⁸ können identisch oder verschieden ausgewählt werden aus der Gruppe bestehend aus -H, C₁-C₄₀ linear- oder verzweigtkettige Alkylreste, N,N-Dimethylaminoethyl, 2-Hydroxyethyl, 2-Methoxyethyl, 2-Ethoxyethyl, Hydroxypropyl, Methoxypropyl oder Ethoxypropyl.

R⁷ und R⁶ sind unabhängig voneinander ausgewählt aus der Gruppe bestehend aus: -H, C₁-C₈ linear- oder verzweigtkettige Alkylketten, Methoxy, Ethoxy, 2-Hydroxyethoxy, 2-Methoxyethoxy und 2-Ethoxyethyl.

Repräsentative aber nicht limitierende Beispiele von geeigneten Monomeren sind zum Beispiel Ester und Amide.

Die Ester können abgeleitet sein von C₁-C₄₀ linearen, C₃-C₄₀ verzweigtkettigen, oder C₃-C₄₀ carbocyclischen Alkoholen, von mehrfachfunktionellen Alkoholen mit 2 bis etwa 10 Hydroxylgruppen wie Ethylenglycol, Hexylenglycol, Glycerin, und 1,2,6-Hexantriol, von Aminoalkoholen oder von Alkoholethern wie Methoxyethanol und Ethoxyethanol oder Polyethylenglykolen.

Besonders vorteilhaft hat sich die Verwendung von Monomeren A herausgestellt, die als Copolymerisate aus insbesondere Ethylacrylat, Methylacrylat, Hydroxyethylacrylat, n-Butylacrylat, Laurylacrylat, Ethylmethacrylat, Methylmethacrylat, Hydroxyethylmethacrylat, n-Butylmethacrylat und Laurylmethacrylat bestehen.

Ferner eignen sich N,N-Dialkylaminoalkylacrylate und -methacrylate und N-Dialkylaminoalkylacryl- und -Methacrylamide der allgemeinen Formel (II) 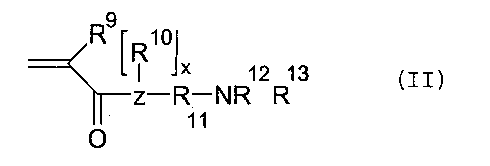 mit
- R⁹: H, Alkyl mit 1 bis 8 C-Atomen,
- R¹⁰: H, Methyl,
- R¹¹: Alkylen mit 1 bis 24 C-Atomen, optional substituiert durch Alkyl,
- R¹², R¹³: C₁-C₄₀-Alkylrest,
- Z: Stickstoff,
- x: 1 oder Sauerstoff für x = 0.

Die Amide können unsubstituiert, N-alkyl oder N-alkylamino monosubstituiert, oder N,N-dialkylsubstituiert oder N,N-dialkylamino disubstituiert sein, worin die Alkyl- oder Alkylaminogruppen von C₁-C₄₀ linearen, C₃-C₄₀ verzweigtkettigen, oder C₃-C₄₀ carbocyclischen Einheiten abgeleitet sind.

Bevorzugte Monomere der Formel (II) sind N,N-Dimethylaminomethyl(meth)acrylat, N,N-Diethylaminomethyl(meth)-acrylat, N,N-Dimethylaminoethyl(meth)acrylat, N,N-Diethylam inoethyl(meth)acrylat und N,N-Dimethylaminopropyl(meth)acrylat.

Ebenfalls verwendbare Monomere sind substituierte Acrylsäuren sowie Salze, Ester und Amide davon, wobei die Substituenten an den Kohlenstoffatomen in der zweiten oder dritten Position der Acrylsäure stehen und unabhängig voneinander ausgewählt sind aus der Gruppe bestehend aus C₁-C₄-Alkyl, -CN, COOH besonders bevorzugt Methacrylsäure-, Ethacrylsäure- und 3-Cyanoacrylsäurederivate. Diese Salze, Ester und Amide dieser substituierten Acrylsäuren können wie oben für die Salze, Ester und Amide der Acrylsäure beschrieben ausgewählt werden.

Andere geeignete Monomere sind Vinyl- und Allylester von C₁-C₄₀ linearen, C₃-C₄₀ verzweigtkettigen oder C₃-C₄₀ carbocyclische Carbonsäuren (z.B.: Vinylacetat, Vinylpropionat, Vinylneononanoat, Vinylneoundekansäure oder t-Butyl-benzoesäure-vinylester), Vinyl- oder Allylhalogenide, bevorzugt Vinylchlorid und Allylchlorid, Vinylether, bevorzugt Methyl-, Ethyl-, Butyl-, oder Dodecylvinylether, Vinylformamid, Vinylmethylacetamid, Vinylamin, Vinyllactame, bevorzugt Vinylpyrrolidon und Vinylcaprolactam, Vinyl- oder Allyl-substituierte heterocyclische Verbindungen, bevorzugt Vinylpyridin, Vinyloxazolin und Allylpyridin.

Weiterhin sind N-Vinylimidazole der allgemeinen Formel (III) geeignet, worin R¹⁴ bis R¹⁶ unabhängig voneinander für Wasserstoff, C₁-C₄-Alkyl oder Phenyl steht:

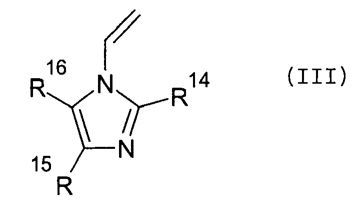

Weitere geeignete Monomere sind Diallylamine der allgemeinen Formel (IV) 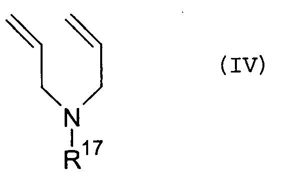 mit
R¹⁷ C₁-C₂₄-Alkyl.

Weitere geeignete Monomere sind Vinylidenchlorid und Kohlenwasserstoffe mit mindestens einer Kohlenstoff-Kohlenstoff Doppelbindung, bevorzugt Styrol, alpha-Methylstyrol, tert.-Butylstyrol, Butadien, Isopren, Cyclohexadien, Ethylen, Propylen, 1-Buten, 2-Buten, Isobutylen, Vinyttoluol, sowie Mischungen dieser Monomere.

Besonders geeignete Monomere sind Acrylsäure, Methacrylsäure, Ethylacrylsäure, Methylacrylat, Ethylacrylat, Propylacrylat, n-Butylacrylat, iso-Butylacrylat, t-Butylacrylat, 2-Ethylhexylacrylat, Decylacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butylethacrylat, 2-Ethylhexylethacrylat, Decylethacrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)acrylate, unge-sättigte Sulfonsäuren wie zum Beispiel Acrylamidopropansulfonsäure; Acrylamid, Methacrylamid, Ethacrylamid, N-Methylacrylamid, N,N-Dimethylacrylamid, N-Ethylacrylamid, N-lsopropylacrylamid, N-Butylacrylamid, N-t-Butylacrylamid, N-Octylacrylamid, N-t-Octylacrylamid, N-Octadecylacrylamid, N-Phenylacrylamid, N-Methylmethacrylamid, N-Ethylmethacrylamid, N-Dodecylmethacrylamid, 1-Vinylimidazol, 1-Vinyl-2-methylimidazol, N,N-Dimethylaminomethyl(meth)acrylat, N,N-Diethylaminomethyl-(meth)acrylät, N,N-Dimethylaminoethyl(meth)acrylat, N,N-Diethylaminoethyl(meth)acrylat, N,N-Dimethylaminobutyl-(meth) acrylat, N,N-Diethylaminobutyl(meth)acrylat, N,N-Dimethylaminohexyl(meth)acrylat, N,N-Dimethylaminooctyl-(meth) acrylat, N,N-Dimethylaminododecyl(meth)acrylat, N-[3-(dimethylamino)propylmethacrylamid, N-[3-(dimethylamino)-propyl]acrylamid, N-[3-(dimethyl-amino)butylmethacrylamid, N-[8-(dimethylamino)octyl]methacrylamid, N-[12-(dimethylamino)-dodecyl]methacrylamid, N-[3-(diethylamino)propylmethacrylamid, N-[3-(diethylamino)propyl]acrylamid; Maleinsäure, Fumarsäure, Maleinsäureanhydrid und seine Halbester, Crotonsäure, Itaconsäure, Diallyldimethylammoniumchlorid, Vinylether (zum Beispiel: Methyl-, Ethyl-, Butyl-, oder Dodecylvinylether), Vinylformamid, Vinylmethylacetamid, Vinylamin; Methylvinylketon, Maleimid, Vinylpyridin, Vinylimidazol, Vinylfuran, Styrol, Styrolsulfonat, Allylalkohol und Mischungen daraus.

Von diesen sind besonders bevorzugt Acrylsäure, Methacrylsäure, Maleinsäure, Fumarsäure, Crotonsäure, Maleinsäureanhydrid sowie dessen Halbester, Methylacrylat, Methylmethacrylat, Ethylacrylat, Ethylmethacrylat, n-Butylacrylat, n-Butylmethacrylat, t-Butylacrylat, t-Butylmethacrylat, Isobutylacrylat, Isobutylmethacrylat, 2-Ethylhexylacrylat, N-t-Butylacrylamid, N-Octylacrylamid, 2-Hydroxyethylacrylat, Hydroxypropylacrylat, 2-Hydroxyethylmethacrylat, Hydroxypropylmethacrylat, Alkylenglykol(meth)acrylate, ungesättigte Sulfonsäuren wie zum Beispiel Acrylamidopropansulfonsäure, Vinylpyrrolidon, Vinylcaprolactam, Vinylether (z.B.: Methyl-, Ethyl-, Butyl-, oder Dodecylvinylether), Vinylformamid, Vinylmethylacetamid, Vinylamin, 1-Vinylimidazol, 1-Vinyl-2-methylimidazol, N,N-Dimethylaminomethylmethacrylat und N-[3-(dimethylamino)propyl]-methacrylamid; 3-Methyl-1-vinylimidazoliumchlorid, 3-Methyl-1-vinylimidazoliummethylsulfat, N,N-Dimethylaminoethylmethacrylat und N-[3-(dimethylamino)propyl]methacrylamid.

Zusätzlich zu den oben genannten Monomeren können als Monomere sogenannte Makromonomere wie zum Beispiel siliconhaltige Makromonomere mit ein oder mehreren radikalisch polymerisierbaren Gruppen oder Alkyloxazolinmakromonomere eingesetzt werden wie sie zum Beispiel in der EP-A-408 311 beschrieben sind.

Des Weiteren können fluorhaltige Monomere wie sie beispielsweise in der EP-B-558 423 beschrieben sind, vernetzend wirkende oder das Molekulargewicht regelnde Verbindungen in Kombination oder alleine eingesetzt werden.

Als Regler können die üblichen dem Fachmann bekannten Verbindungen wie zum Beispiel Schwefelverbindungen (z.B.: Mercaptoethanol, 2-Ethylhexylthioglykolat, Thioglykolsäure oder Dodecylmercaptan) sowie Tribromchlormethan oder andere Verbindungen die regelnd auf das Molekulargewicht der erhaltenen Polymerisate wirken, verwendet werden. Es können gegebenenfalls auch thiolgruppenhaltige Siliconverbindungen eingesetzt werden. Bevorzugt werden aber siliconfreie Regler eingesetzt und die Synthesebedinungen so eingestellt, dass keine Regler verwendet werden müssen.

Als vernetzende Monomere können Verbindungen mit mindestens zwei ethylenisch ungesättigten Doppelbindungen eingesetzt werden wie zum Beispiel Ester von ethylenisch ungesättigten Carbonsäuren, wie Acrylsäure oder Methacrylsäure und mehrwertigen Alkoholen, Ether von mindestens zweiwertigen Alkoholen wie zum Beispiel Vinylether oder Allylether. Außerdem geeignet sind geradkettige oder verzweigte, lineare oder cyclische aliphatische oder aromatische Kohlenwasserstoffe, die aber mindestens zwei Doppelbindungen vertragen, welche bei den aliphatischen Kohlenwasserstoffen nicht konjugiert sein dürfen. Ferner geeignet sind Amide der Acryl- und Methacrylsäure und N-Allylamine von mindestens zweiwertigen Aminen wie zum Beispiel (1,2-Diaminoethan, 1,3-Diaminopropan). Ferner sind Triallylamin oder entsprechende Ammoniumsalze, N-Vinylverbindungen von Harnstoffderivaten, mindestens zweiwertigen Amiden, Cyanuraten oder Urethanen. Weitere geeignete Vernetzer sind Divinyldioxan, Tetraallylsilan oder Tetravinylsilan.

Besonders bevorzugte Vernetzer sind beispielsweise Methylenbisacrylamid, Triallylamin und Triallylammoniumsalze, Divinylimidazol, N,N'-Divinylethylenharnstoff, Umsetzungsprodukte mehrwertiger Alkohole mit Acrylsäure oder Methacrylsäure, Methacrylsäureester und Acrylsäureester von Polyalkylenoxiden oder mehrwertigen Alkoholen die mit Ethylenoxid und/oder Propylenoxid und/oder Epichlorhydrin umgesetzt worden sind. Wie dem Fachmann geläufig ist, können aber die Molekulargewichte so eingestellt werden, dass keine Vernetzer notwendig sind.

Geeignete Siliconderivate B sind insbesondere die unter dem Namen Silicontenside oder unter den INCI-Namen Dimethicone Copolyole oder Dimethicone Copolyol Acetate bekannten Verbindungen. Geeignete Siliconderivate B beinhalten Verbindungen mit den CAS-Nummern: 64365-23-7; 67762-85-0; 68440-66-4; 68554-65-4; 68937-54-2; 68937-55-3; 68938-54-5; 71965-38-3. Diese sind beispielsweise unter den Markennamen Abil™ (Fa. Degussa Oligomers/Silicones), Alkasil™ (Fa. Rhone-Poulenc), Silicone Polyol Copolymer™ (Fa. Genesee), Belsil™ (Fa. Wacker), Silwet™ und Silsoft™ (Fa. Witco) oder Dow Corning Silicones DC (Fa. Dow Corning) erhältlich.

Besonders geeignete Siliconderivate B sind solche der folgenden allgemeinen Formel (V): 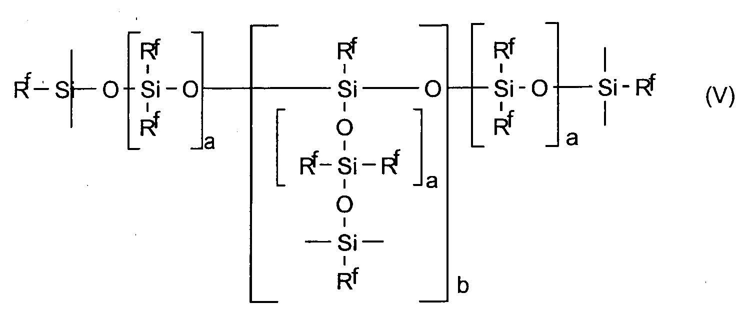 wobei der Rest
- R^{f}: der Rest R¹ sein kann, wobei
- R¹: ein Alkylrest mit 1 bis 16 C-Atomen, oder ein Arylrest ist,
oder
- R^{f}: der Rest R² oder R³ ist, mit der Maßgabe, dass mindestens ein Rest R^{f} der Rest R² ist, wobei
- R² und R³: unabhängig voneinander Polyetherreste der Formel VI

(F)_{q}(O(C₂H_{4-d}R'_{d}0)ₘ(CₓH₂ₓO)ᵣZ)_{w} (VI)

sind, mit der Bedeutung
- d: 1 bis 3
- m: > 1
- q: 0 oder 1
- x: 2 bis 10
- r: > 1
- w: 1 bis 4
- F: ein Kohlenwasserstoffrest, der auch verzweigt sein kann,
- R': ein Wasserstoffrest, ein einwertiger Kohlenwasserstoffrest mit 1 bis 18 C-Atomen,
- Z: ein H-Atom oder ein einwertiger organischer Rest wie Alkyl oder Alkyl- oder Arylester ist,
und wobei in Formel V
- b: eine Zahl von 0 bis 8 ist,
- a: eine Zahl von 1 bis 100 ist, wenn b eine Zahl von 6 bis 8 ist,
- a: eine Zahl von 1 bis 200 ist, wenn b eine Zahl von 3 bis 6 ist,
- a: eine Zahl von 1 bis 300 ist, wenn b eine Zahl von 0 bis 3 ist.

Die Werte von a und b sind als durchschnittliche Werte zu verstehen, da die erfindungsgemäß mitverwendeten Siliconpolyether-Copolymere in Form von Regelfalläquilibrierten Gemischen vorliegen. Besonders bevorzugt sind solche Siliconpolyether-Copolymere, bei denen alle Reste R¹ Methylreste sind.

Das Siloxangemisch kann geradkettig (b = 0) oder verzweigt sein (b > 0 bis 8). Der Wert von a kann erfahrungsgemäß nur in der angegebenen Weise mit Werten von b kombiniert werden, da ansonsten die erhöhte Viskosität eine Handhabung unmöglich macht.

Die erfindungsgemäß verwendeten gepfropften Siliconpolyether-Copolymere zeichnen sich durch eine optimale Kompatibilität, bei gleichzeitig eingeschränkter Löslichkeit aus. Dadurch wird die Entschäumung von insbesondere Metallbearbeitungsflüssigkeiten und Kraftübertragungsölen optimiert. Ferner haben die erfindungsgemäß verwendeten gepfropften Siliconpolyether-Copolymere, im Gegensatz zu Siliconöl und Polyethersilicone, keinen negativen Einfluss auf das Luftabscheidevermögen von ölbasierenden Systemen, was insbesondere bei Turbinenölen wichtig ist.

Sie können den Ölgemischen zugesetzt werden, wobei diese hier unter 150 ppm, bevorzugt zwischen 10 und 100 ppm eingesetzt werden.

Die erfindungsgemäß verwendeten gepfropften Polyethersiloxane werden zum Entschäumen und Entlüften von nicht wassermischbaren, auf Öl und Additiven basierenden Systemen eingesetzt, wobei als Öle insbesondere Mineralöle, synthetische oder Hydrocracköle verwendet werden. Diese Öl-basierenden Systeme werden als Motorenöle, Hydrauliköle, Getriebeöle, Turbinenöle und in verschiedenen Metallbearbeitungsprozessen eingesetzt. Aufgabe dieser Systeme kann Schmierung, Wärmeabführung aber auch Kraftübertragung sein.

Um die Wirkung des erfindungsgemäß zu verwendenden gepfropften Siliconpolyether-Copolymer weiter zu verbessern, kann es von Vorteil sein, sie in einem Lösungsmittel gelöst zuzugeben. Bevorzugt werden hier aromatenhaltige Lösungsmittel wie beispielsweise Solvesso® 150.

Die in der Formel VI beschriebenen Polyether werden durch Umsetzung eines Startalkohols, der bevorzugt Allylalkohol oder Alkylalkohol ist, durch Anlagerung von Monomeren gewonnen. Geeignet sind Ethylenoxid, Propylenoxid, Verbindung aus der Gruppe Tetrahydrofuran, 1,2-Epoxybutan (n-Butylenoxid), 2,3-Epoxybutan (iso-Butylenoxid), sowie Dodecyloxid.

Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.

Die Reste werden an das Molekül des Polysiloxans durch Addition an SiH-Gruppen des Polysiloxans in Anwesenheit eines Hydrosilylierungskatalysators oder durch die Umsetzung von HO-funktionnellen Polyetherresten mit SiCl- oder SiH-Gruppen eingeführt. Nach dem Stand der Technik können Platin, Palladium oder Rhodium, Amin oder Boran-Katalysatoren verwendet werden.

Für den Einsatz als Entschäumer und Entlüfter werden insbesondere gepfropfte Siliconpolyether-Copolymere der allgemeinen Formel (VII) 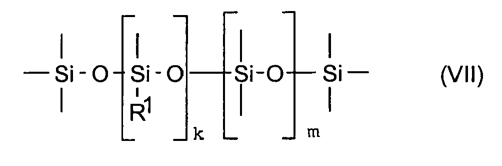 worin
die Siloxankette (m) zwischen 20 und 30 nichtmodifizierte Siloxaneinheiten enthält,
- R¹: zwischen 1 und 5 Gruppen (k) und
- R¹: ein Allylalkohol oder Alkyl-gestarteter Polyether, welcher mit 1 bis 10 Ethylenoxidmolekülen und zwischen 1 und 25 Propylenoxidmolekülen umgesetzt ist,

wobei die Siliconpolyether Copolymere bevorzugterweise mit Monomeren der allgemeinen Formel

X-C (O) CR⁷=CHR⁶

nach bekannten Verfahren des Standes der Technik gepfropft werden.

Diese Produkte wurden anwendungstechnisch in dem ASTM 892 Schaumtest überprüft. Außerdem wurde das Luftabscheidevermögen nach der Impinger-Methode überprüft. Verglichen wurden die erfindungsgemäß hergestellten Produkte mit herkömmlichen Siliconölentschäumern und Acrylatentlüftern. Als Ölformulierung wurde ein Mineralöl eingesetzt, welches alle Additive bis auf den Entschäumer enthielt. Der Entschäumer wurde mit 20 ppm eingesetzt.

Ergebnisse im Schaumtest nach ASTM 892 in einem Mineralöl:

| **Entschäumer** | **Test 1 (bei 25 °C)** | **Test 2 (bei 93 °C)** |
|---|---|---|
| Mineralöl ohne Entschäumer | 500 ml Schaum 312 Sekunden Zerfallszeit | 90 ml Schaum 23 Sekunden Zerfallszeit |
| Mineralöl mit 20 ppm DC 200 (Siliconölentschäumer der Firma Dow Corning) | 5 ml Schaum 1 Sekunde Zerfallszeit | 0 ml Schaum 0 Sekunden Zerfallszeit |
| Mineralöl mit 20 ppm Acrylatentschäumer | 50 ml Schaum 5 Sekunden Zerfallszeit | 30 ml Schaum 0 Sekunden Zerfallszeit |
| Mineralöl mit 20 ppm erfindungsgemäßem gepfropften Siliconpolyether der Formel VIII | 0 ml Schaum 0 Sekunden Zerfallszeit | 0 ml Schaum 0 Sekunden Zerfallszeit |

| | | |
|---|---|---|
| Ergebnisse im Schaumtest nach ASTM 892 in einem Mineralöl und VPL* in einem Verhältnis 75 zu 25: | | |

| **Entschäumer** | **Test 1 (bei 25 °C)** | **Test 2 (bei 93 °C)** |
|---|---|---|
| Mineralöl + VPL ohne Entschäumer | 530 ml Schaum 322 Sekunden Zerfallszeit | 93 ml Schaum 24 Sekunden Zerfallszeit |
| Mineralöl + VPL mit 20 ppm DC 200 (Siliconölentschäumer der Firma Dow Corning) | 7 ml Schaum 1 Sekunde Zerfallszeit | 0 ml Schaum 0 Sekunden Zerfallszeit |
| Mineralöl + VPL mit 20 ppm Acrylatentschäumer | 62 ml Schaum 6 Sekunden Zerfallszeit | 34 ml Schaum 0 Sekunden Zerfallszeit |
| Mineralöl + VPL mit 20 ppm erfindungsgemäßem gepfropften Siliconpolyether der Formel VIII | 0 ml Schaum 0 Sekunden Zerfallszeit | 0 ml Schaum 0 Sekunden Zerfallszeit |

| | | |
|---|---|---|
| *VPL = Viscoplex 0-220: Viscosity Index Improver der Firma Rohmax (Degussa) | | |

Luftabscheidevermögen für das Mineralöl System (Impinger-Methode):

| **Entschäumer** | **Zeit (Minuten)** | **Gehalt an dispergierter Luft in %** |
|---|---|---|
| Mineralöl ohne Entschäumer | 1 | 0,53 |
| | 2 | 0,26 |
| | 3 | 0,16 |
| Mineralöl mit 20 ppm DC 200 (Siliconölentschäumer der Firma Dow Corning) | 1 | 0,81 |
| | 2 | 0,57 |
| | 3 | 0,46 |
| | 4 | 0,32 |
| | 5 | 0,22 |
| | 6 | 0,17 |
| Mineralöl mit 20 ppm Acrylatentschäumer | 1 | 0,58 |
| | 2 | 0,30 |
| | 3 | 0,21 |
| | 4 | 0,16 |
| Mineralöl mit 20 ppm erfindungsgemäßem gepfropften Siliconpolyether | 1 | 0,40 |
| | 2 | 0,32 |
| | 3 | 0,21 |
| | 4 | 0,16 |

Luftabscheidevermögen für das Mineralöl und VPL System (Impinger-Methode) :

| **Entschäumer** | **Zeit (Minuten)** | **Gehalt an dispergierter Luft in %** |
|---|---|---|
| Mineralöl + VPL ohne Entschäumer | 1 | 0,55 |
| | 2 | 0,27 |
| | 3 | 0,17 |
| Mineralöl + VPL mit 20 ppm DC 200 (Siliconölentschäumer der Firma Dow Corning) | 1 | 0,82 |
| | 2 | 0,57 |
| | 3 | 0,45 |
| | 4 | 0,32 |
| | 5 | 0,21 |
| | 6 | 0,17 |
| Mineralöl + VPL mit 20 ppm Acrylatentschäumer | 1 | 0,59 |
| | 2 | 0,31 |
| | 3 | 0,20 |
| | 4 | 0,16 |
| Mineralöl + VPL mit 20 ppm erfindungsgemäßem gepfropften Siliconpolyether | 1 | 0,42 |
| | 2 | 0,30 |
| | 3 | 0,19 |
| | 4 | 0,16 |

Die Versuche zeigen, dass das erfindungsgemäß eingesetzte gepfropfte Siliconpolyether-Copolymer die guten Eigenschaften des Siliconöls (gute Entschäumung bei niedriger Dosierung) und die guten Eigenschaften der Polyacrylate (keinen Einfluss auf das Luftabscheidevermögen) besitzt.

Das erfindungsgemäß eingesetzte gepfropfte Siliconpolyether-Copolymer besitzt die gleiche Entschäumereffizienz wie Siliconöl oder Polyethersiloxane und hat aber im Gegensatz zum Siliconöl oder Polyethersiloxan keinen negativen Einfluss auf das Luftabscheidevermögen. Im Gegensatz zum Siliconöl ist es wesentlich verträglicher in den ölbasierenden Systemen.

## Patentansprüche

1. Wasserunlösliches Polymerisat, erhältlich durch radikalische Polymerisation von wenigstens zwei ethylenisch ungesättigten Monomeren A in Gegenwart wenigtens eines Polyalkylenoxidhaltigen Polysiloxans B, wobei bis zu 50 % Gewichtsteile der ungesättigten Monomeren A in Gegenwart von mindestens 50 % Gewichtsteilen des Polysiloxans B polymerisiert werden.

2. Polymerisat nach Anspruch 1 **dadurch gekennzeichnet, dass** die ungesättigten Monomeren A zu 40 bis 100 Gew.-% ausgewählt sind aus der Gruppe Acrylsäure, Methacrylsäure, Imidazolin und Diallylamin Derivaten.

3. Polymerisat nach Anspruch 1 **dadurch gekennzeichnet, dass** die ungesättigten Monomeren A zu 0,5 bis 80 Gew.-% ausgewählt sind aus der Gruppe Ethyl(meth)acrylat, Methyl (meth) acrylat, Hydroxyethyl(meth)acrylat, n-Butyl-(meth) acrylat, Lauryl (meth) acrylat und Stearyl (meth) acrylat.

4. Polymerisat nach einem der Ansprüche 1 bis 3, **dadurch gekennzeichnet, dass** die ungesättigten Monomeren A zu 0,5 bis 60 Gew.-% ausgewählt sind aus der Gruppe der Verbindungen Methylmethacrylat, tert.-Butylacrylat, Styrol, N-tert.-Butylacrylamid, Vinylacetat, Vinylpropionat, Vinylcaprolactam, Vinylpyrrolidon, Diallylamin, Methyldiallylamin und Vinylimidazol.

5. Polymerisat gemäß den Ansprüchen 1 bis 4, **dadurch gekennzeichnet, dass** die Polymerkomponente B ein Polyoxyalkylen-Polysiloxan-Copolymer der allgemeinen Formel (V) 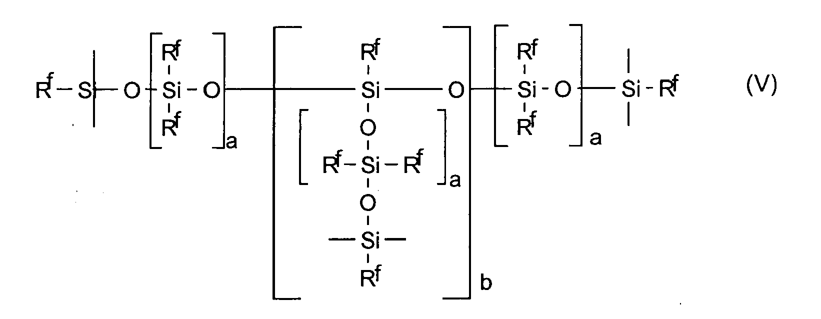
wobei der Rest
R^{f} der Rest R¹ sein kann, wobei
R¹ ein Alkylrest mit 1 bis 16 C-Atomen, oder ein Arylrest ist,
oder
R^{f} der Rest R² oder R³ ist, mit der Maßgabe, dass mindestens ein Rest R^{f} der Rest R² ist, wobei
R² und R³ unabhängig voneinander, Polyetherreste der Formel VI
(F)_{q}(O (C₂H_{4-d}R*'*_{d}0)ₘ(CₓH₂ₓO)ᵣZ)_{w}, (VI)
sind, mit der Bedeutung
d 1 bis 3
m > 1
q 0 oder 1
x 2 bis 10
r > 1
F ein Kohlenwasserstoffrest, der auch verzweigt sein kann,
R*'* ein Wasserstoffrest, ein einwertiger Kohlenwasserstoffrest mit 1 bis 18 C-Atomen,
Z ein H-Atom oder ein einwertiger organischer Rest wie Alkyl oder Alkyl- oder Arylester ist,
und wobei in Formel V
b eine Zahl von 0 bis 8 ist,
a eine Zahl von 1 bis 100 ist, wenn b eine Zahl von 6 bis 8 ist,
a eine Zahl von 1 bis 200 ist, wenn b eine zahl von 3 bis 6 ist,
a eine Zahl von 1 bis 300 ist, wenn b eine Zahl von 0 bis 3 ist.

6. Polymerisat gemäß den Ansprüchen 1 bis 4 **dadurch gekennzeichnet, dass** Komponente B ein Siliconpolyether-Copolymer der allgemeinen Formel (VII) 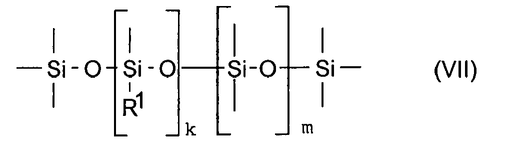 ist, worin
die Siloxankette (m) zwischen 20 und 30 nichtmodifizierte Siloxaneinheiten enthält,
R¹ zwischen 1 und 5 Gruppen (k) und
R¹ ein Allylalkohol oder Alkyl-gestarteter Polyether, welcher mit 1 bis 10 Ethylenoxidmolekülen und zwischen 1 und 25 Propylenoxidmolekülen umgesetzt ist.

7. Verwendung von gepfropften Polyoxyalkylen-Polysiloxan-Copolymeren gemäß den Ansprüchen 1 bis 6 als Entschäumer und Entlüfter für nichtwässrige Systeme auf Basis von Mineralölen oder Syntheseölen.

8. Verwendung von wasserunlöslichen gepfropften Polyoxyalkylen-Polysiloxan-Blockmischcopolymerisate gemäß Anspruch 7 zur Entschäumung und Entlüftung von Hydraulikölen, Getriebeölen, Turbinenölen, Motorenölen und Kühlschmierstoffen.

9. Verwendung der gepfropften Polyoxyalkylen-Polysiloxan-Copolymeren gemäß den Ansprüchen 1 bis 6 unter 150 ppm, bevorzugterweise zwischen 10 und 100 ppm, bezogen auf die Ölkomponente.
